# EUROPÄISCHE PATENTSCHRIFT

(11) **EP 2 047 152 B1**
(45) Veröffentlichungstag und Bekanntmachung des Hinweises auf die Patenterteilung: **02.02.2011**
(21) Anmeldenummer: 07847033.3
(22) Anmeldetag: 07.12.2007
(51) Int. Cl.: F16K 7/07

(54) **QUETSCHVENTIL**
PINCH VALVE
VANNE À MANCHON

(30) Priorität: 12.02.2007 DE 102007006767
(43) Veröffentlichungstag der Anmeldung: 15.04.2009
(73) Patentinhaber: FESTO AG & Co. KG, 73734 Esslingen (DE)
(72) Erfinder: KEES, Ulrich, 66424 Homburg (DE); RÖHRIG, Harald, 66583 Spiesen-Elversbeg (DE)
(74) Vertreter: Abel, Martin
(86) Internationale Anmeldenummer: PCT/EP2007/010686
(87) Internationale Veröffentlichungsnummer: WO 2008/098604

(56) Entgegenhaltungen:
- DE-B- 1 024 300
- JP-A- 62 278 382

## Beschreibung

Die Erfindung betrifft ein Quetschventil, mit einem sich in einem Ventilgehäuse zwischen zwei je einen Fluidanschluss aufweisenden Anschlusstücken erstreckenden, eine flexible Umfangswand aufweisenden und einen von Fluid durchströmbaren Ventilgliedkanal definierenden schlauchförmigen Ventilglied, und mit einem in dem Ventilgehäuse um die Umfangswand des Ventilgliedes herum angeordneten Beaufschlagungsraum, in dem ein Quetschmittel unmittelbar auf die Umfangswand des Ventilgliedes einwirken kann, um diese zur Veränderung des von dem Ventilglied zur Verfügung gestellten Durchflussquerschnittes zusammenzuquetschen, wobei die Umfangswand des Ventilgliedes von einem in das Ventilgehäuse eingesetzten starren Stützrohr umschlossen ist, das die radiale Aufweitung der Umfangswand des Ventilgliedes begrenzt und dessen die Umfangswand des Ventilgliedes aufnehmender Rohrkanal einen sich axial von entgegengesetzten Seiten her zum längsmittigen Bereich hin verjüngenden Querschnitt aufweist, wobei der Rohrkanal derart ausgebildet ist, dass bei sich daran radial abstützendem Ventilglied der Ventilgliedkanal in dem längsmittigen Bereich eine Engstelle aufweist.

Aus der DE 1 024 300 C geht ein pneumatisches Quetschventil hervor, das ein in einem Ventilgehäuse untergebrachtes schlauchförmiges Ventilglied enthält, um das herum ein ringförmiger Beaufschlagungsraum ausgebildet ist, der über einen Fluidkanal mit Druckluft beaufschlagt werden kann. Durch die Druckluft kann die flexible Umfangswand des Ventilgliedes im Bereich eines vom zu steuernden Fluid durchströmten Ventilgliedkanals zusammengequetscht werden, um den von dem Ventilglied zur Verfügung gestellten Durchflussquerschnitt zu verändern. Indem unmittelbar die Druckluft als fluidisches Quetschmittel mit dem Ventilglied zusammenwirkt, kann relativ einfach ein Quetschventil vom Typ "Normalerweise geöffnet" realisiert werden, bei dem die maximale Offenstellung vorliegt, wenn der Beaufschlagungsraum drucklos geschaltet wird. Das zu steuernde Fluid ist dann in der Lage, die Umfangswand des Ventilgliedes zur Freigabe eines Durchflussquerschnittes aufzuweiten.

Bei dem bekannten Quetschventil wird das Ventilglied durch ein Stützrohr, das einen sich axial zur Längsmitte hin verjüngenden Rohrkanal aufweist, derart radial abgestützt, dass seine Umfangswand in der maximalen Offenstellung über die Länge des Ventilgliedkanales eine kreiszylindrische Form einnimmt. Ausgehend hiervon wird die Umfangswand in Abhängigkeit von der zwischen dem Beaufschlagungsraum und dem von dem Ventilglied durchsetzten Ventilgliedkanal herrschenden Druckdifferenz radial verformt. Insbesondere bei dickflüssigen oder feststoffhaltigen Fluiden können sich im Ventilkanal Ablagerungen absetzen, die die Fluidströmung beeinträchtigen.

Aus der undatierten Produktinformation "Pneumatisches Quetschventil Typ VMF / Pneumatic pinch valve type VMF" der Firma Armaturen & Separations GmbH ist ein pneumatisches Quetschventil bekannt, dessen schlauchförmiges Ventilglied vom strömenden Fluid über eine kreiszylindrische Form hinaus radial aufgeweitet werden kann. Die Folge sind wechselnde Biegebeanspruchungen für das Material des Ventilgliedes, die die Lebensdauer des Ventilgliedes herabsetzen können. Gleiches gilt für das in der DE 1 050 622 beschriebene Schlauch-Absperrventil.

Aus der DE 29 30 853 C2 ist im Zusammenhang mit einem Quetschventil, bei dem als Quetschmittel ein mechanisch mit der Umfangswand des Ventilgliedes zusammenwirkendes Quetschelement vorhanden ist, eine um das Ventilglied herum angeordnete Hülse vorgesehen, die in der Lage ist, die radiale Aufweitung der Umfangswand zu begrenzen. Die lokal konzentrierte Beaufschlagung der Umfangswand durch das Quetschelement kann aber auch hier die Lebensdauer beeinträchtigen.

Aus der JP 62-278382 A ist ein Quetschventil der eingangs genannten Art bekannt, dessen schlauchförmiges Ventilglied von einem gehäuseartigen Rahmen umschlossen ist, der eine Öffnung aufweist, in der ein Betätigungsschaft gelagert ist, der auf die Umfangswand des Ventilgliedes einwirken kann, um selbiges zusammenzuquetschen.

Es ist eine Aufgabe der vorliegenden Erfindung, bei einem Quetschventil, bei dem das unmittelbar auf das Ventilglied einwirkende Quetschmittel ein fluidisches Betätigungsmedium ist, Maßnahmen zu treffen, die einem frühzeitigen Verschleiß und inneren Verschmutzungen des Ventilgliedes entgegenwirken.

Zur Lösung dieser Aufgabe ist vorgesehen, dass das Quetschmittel ein den Beaufschlagungsraum beaufschlagendes fluidisches Betätigungsmedium ist, wobei sich die Wandstärke der Umfangswand des Ventilgliedes ausgehend von den den beiden axialen Stirnseiten des Ventilgliedes zugewandten Endbereichen bis hin zum axial mittigen Bereich des Ventilgliedes kontinuierlich verringert.

Somit ergibt sich ein zuverlässig arbeitendes Quetschventil vom Typ "Normalerweise geöffnet", das im drucklosen Zustand des Beaufschlagungsraumes die maximale Offenstellung des schlauchförmigen Ventilgliedes ermöglicht. Das zu steuernde Fluid ist hier in der Lage, die Umfangswand zur Freigabe eines maximalen Durchflussquerschnittes radial aufzuweiten. Das Stützrohr begrenzt hierbei die Aufweitung und verhindert eine Überdehnung der flexiblen Umfangswand. Es kann insbesondere verhindert werden, dass die Umfangswand wechselnd in einander entgegengesetzte radiale Richtungen verformt wird. Hierzu trägt auch die konische Gestaltung des die Umfangswand abstützenden Rohrkanals des Stützrohres bei, der sich von entgegengesetzten Seiten her in axialer Richtung zu seinem mittleren Bereich hin verjüngt. Somit kann auch die flexible Umfangswand nicht weiter radial gedehnt werden als eine entsprechende Formgebung mit sich zu ihrer Längsmitte hin verjüngendem Querschnitt. Ein damit erzielbarer weiterer Vorteil besteht darin, dass der Querschnitt des Ventilgliedkanals auch in der maximalen Offenstellung nicht konstant ist, sondern eine Engstelle aufweist, an der eine hohe Strömungsgeschwindigkeit des zu steuernden Fluides auftritt, was vor allem bei dickflüssigeren oder feststoffhaltigen Medien einen Selbstreinigungseffekt zur Folge hat. Der Zeitaufwand für mechanische Reinigungsarbeiten kann dadurch verringert werden.

Vorteilhafte Weiterbildungen der Erfindung gehen aus den Unteransprüchen hervor.

Die Verjüngung des Rohrkanals beginnt zweckmäßigerweise schon an den beiden äußeren Stirnseiten des Stützrohres. Dies ermöglicht eine besonders harmonische Querschnittsänderung über einen relativ langen Bereich hinweg.

Bevorzugt ist das schlauchförmige Ventilglied als gummielastisches Formteil ausgebildet, dessen Umfangswand auch schon im nicht fluidbeaufschlagten Ausgangszustand allein aufgrund seiner eigenen Formstabilität eine sich zur Längsmitte hin verjüngende Formgebung aufweist. Diese Formgebung entspricht zweckmäßigerweise im Wesentlichen dem Verlauf des Rohrkanals. Somit kann die Umfangswand auch schon im innendrucklosen Zustand des Ventilgliedkanals an der Wandung des Rohrkanals anliegen.

Der mit dem fluidischen Betätigungsmedium gesteuert zu befüllende Beaufschlagungsraum liegt zweckmäßigerweise um die Umfangswand des Ventilgliedes herum zwischen dieser Umfangswand und dem starren Stützrohr. Ist die Wandung des Stützrohres von mindestens einem Fluiddurchtrittskanal radial durchsetzt, ergibt sich eine optimale, verzögerungsfreie Zufuhr und Abfuhr des Betätigungsmediums. Vorteilhaft ist insbesondere eine Platzierung mindestens eines Fluiddurchtrittskanals in dem verjüngten längsmittigen Bereich des Stützrohrs. Um eine optimale Umströmung der Umfangswand durch das Betätigungsmedium zu erhalten, können in der Wandung des Stützrohrs insbesondere zwei sich bezüglich der Ventilglied-Längsachse diametral gegenüberliegende Fluiddurchtrittskanäle ausgebildet sein.

Das Stützrohr lässt sich in einfacher Weise um die Umfangswand des Ventilgliedes herum anbringen, wenn es in der Umfangsrichtung segmentiert ist und aus mehreren jeweils einen bogenförmigen Querschnitt aufweisenden Schalenelementen besteht, die vor der Installation im Ventilgehäuse in radialer Richtung außen an die Umfangswand des Ventilgliedes angesetzt werden können.

Um die Schalenelemente am Außenumfang des Ventilgliedes zu fixieren, kann ein um das segmentierte Stützrohr herum angeordnetes Sicherungsrohr vorhanden sein. Es ist insbesondere eine Bauform vorgesehen, bei der das Sicherungsrohr auf die zuvor zusammengesetzte Baugruppe bestehend aus schlauchförmigem Ventilglied und segmentiertem Stützrohr koaxial aufsteckbar ist.

Ist ein Sicherungsrohr vorhanden, weist auch dieses zweckmäßigerweise mindestens einen Fluiddurchtrittskanal für die Zufuhr des fluidischen Betätigungsmediums zu dem Beaufschlagungsraum auf.

Das Verformungsverhalten des Ventilgliedes wird begünstigt, wenn es im Bereich der Umfangswand einen länglichen Querschnitt aufweist. Bei der Beaufschlagung durch das fluidische Betätigungsmedium erfolgt dadurch eine radiale Quetschung in der bevorzugten Breitenrichtung, mit relativ geringem Quetschweg. Letzteres gewährleistet hohe Schaltgeschwindigkeiten und verringert die Beanspruchung bei der Deformation des flexiblen und insbesondere gummielastischen Materials der Umfangswand.

Zweckmäßigerweise verfügt der Rohrkanal des Stützrohres über einen an den länglichen Querschnitt der Umfangswand angepassten länglichen Querschnitt.

Nachfolgend wird die Erfindung anhand der beiliegenden Zeichnung näher erläutert. In dieser zeigen:
- Figur 1: einen Längsschnitt durch eine bevorzugte Bauform des erfindungsgemäßen Quetschventils in der unbetä- tigten maximalen Offenstellung,
- Figur 2: das Quetschventil aus Figur 1 in der Schließstel- lung,
- Figur 3: einen Querschnitt gemäß Schnittlinie III-III aus Figur 1 bei maximaler Offenstellung und
- Figur 4: einen Querschnitt gemäß Schnittlinie IV-IV aus Fi- gur 2 bei Einnahme der Schließstellung und hier- durch komplett abgesperrtem Ventilgliedkanal.

Das in seiner Gesamtheit mit Bezugsziffer 1 bezeichnete Quetschventil verfügt über ein Ventilgehäuse 2, das einen Gehäuse-Innenraum 3 definiert, in dem ein schlauchförmiges Ventilglied 4 angeordnet ist.

Das Ventilgehäuse 2 umfasst ein rohrförmiges Gehäusehauptteil 5 und zwei an einander entgegengesetzten Stirnseiten daran angeordnete Anschlussstücke 6, 7, die gleichzeitig die Funktion von Gehäusedeckeln übernehmen. Jedes Anschlussstück 6, 7 ist von einem kanalförmigen Fluidanschluss 6a, 7a durchsetzt, insbesondere koaxial.

Wenigstens eines der Anschlussstücke 6, 7 kann einstückig mit dem Gehäusehauptteil 5 ausgebildet sein. Bevorzugt wird allerdings in beiden Fällen eine separate Ausgestaltung, insbesondere mit lösbarer Befestigung an dem Gehäusehauptteil 5.

Exemplarisch sind beide Anschlussstücke 6, 7 mit dem Gehäusehauptteil 5 verschraubt. Die Anschlussstücke 6, 7 sind mit Außengewinden 8 versehen, mit denen sie mit in den Innenumfang des rohrförmigen Gehäusehauptteils 5 eingebrachten Innengewinden 9 verschraubt sind.

Das schlauchförmige Ventilglied 4 ist insbesondere ein einstückiges Bauteil und besteht zweckmäßigerweise aus einem gummielastischen Material, insbesondere ein Elastomermaterial. Es ist koaxial von einem Fluidkanal durchsetzt, der als Ventilgliedkanal 12 bezeichnet sei. Über den größten Teil seiner Länge ist der Ventilgliedkanal 12 von einer flexiblen, insbesondere gummielastischen Umfangswand 13 umschlossen, deren Längsachse mit der Ventilglied-Längsachse 14 zusammenfällt. An seinen beiden axialen Stirnseiten endet das Ventilglied 4 mit je einem radial abstehenden, bevorzugt scheibenförmigen Flanschabschnitt 15, der insbesondere einstückig mit der Umfangswand 13 ausgebildet ist.

Das Ventilglied 4 und die beiden Anschlussstücke 6, 7 sind so zueinander ausgerichtet, dass der Ventilgliedkanal 12 mit den beiden kanalförmigen Fluidanschlüssen 6a, 7a fluchtet. Ein über den einen oder anderen Fluidanschluss 6a, 7a eingespeistes Fluid kann somit den Ventilgliedkanal 12 zum jeweils anderen Fluidanschluss 7a, 6a hin durchströmen und über Letzteren das Quetschventil 1 wieder verlassen.

Den Fluidanschlüssen 6a, 7a zugeordnete Befestigungsmittel 6b, 7b, beispielsweise als Innengewinde ausgeführt, ermöglichen den fluiddichten Anschluss je einer Fluidleitung, über die hinweg das zu steuernde Fluid an das Quetschventil 1 herangeführt und von diesem weggeführt werden kann.

Der Ventilgliedkanal 12 und die beiden Fluidanschlüsse 6a, 7a sind insbesondere koaxial zueinander ausgerichtet.

Um eine abgedichtete Verbindung zwischen dem Ventilglied 4 und den beiden Anschlussstücken 6, 7 zu gewährleisten, sind die beiden Flanschabschnitte 15 mit ihren einander entgegengesetzten äußeren Stirnflächen 16 unter Abdichtung fest mit der jeweils zugewandten Stirnfläche 19 des benachbarten Anschlussstückes 6, 7 verspannt. Die Abdichtung wird begünstigt, wenn an der äußeren Stirnfläche 16 ein ringförmig umlaufender Dichtwulst ausgebildet ist, der in eine ringförmige Vertiefung des benachbarten Anschlussstückes 6, 7 eingreift.

Um das Ventilglied 4 zwischen den beiden Anschlussstücken 6, 7 axial verspannen zu können, ist, in koaxialer Anordnung, um die rohrförmige Umfangswand 13 herum ein starres Stützrohr 17 angeordnet. Das Stützrohr 17 befindet sich in dem axialen Zwischenraum zwischen den beiden Flanschabschnitten 15, wobei seine beiden einander axial entgegengesetzt orientierten Rohr-Stirnflächen 18 je einer der beiden einander axial zugewandten inneren Stirnflächen 22 der Flanschabschnitte 15 zugewandt sind. Letztere stützen sich an den Rohr-Stirnflächen 18 axial ab. Beim Einschrauben der beiden Anschlussstücke 6, 7 werden somit die beiden Flanschabschnitte 15 jeweils axial zwischen den Rohr-Stirnflächen 18 des Stützrohres 17 und den Stirnflächen 19 der Anschlussstücke 6, 7 unter Abdichtung fluiddicht verspannt.

Das Stützrohr 17 dient darüber hinaus der radialen Abstützung der flexiblen Umfangswand 13. Letztere durchsetzt den von dem Stützrohr 17 definierten Rohrkanal 23 und kann von dem in dem Ventilgliedkanal 12 strömenden Fluid radial nach außen gegen die den Rohrkanal 23 definierende Stützrohrwand 24 angedrückt werden. Ein radiales Aufweiten des Ventilgliedes 4 im Bereich der Umfangswand 13 ist folglich nur so weit möglich, wie dies die Stützrohrwand 24 zulässt.

Der ringförmige Zwischenraum radial zwischen dem Stützrohr 17 und der von diesem umgebenen Umfangswand 13 des Ventilgliedes 4 bildet einen für Fluidbeaufschlagung vorgesehenen Beaufschlagungsraum 25. In diesem Beaufschlagungsraum 25 kann über einen außen am Ventilgehäuse 2 angeordneten Steueranschluss 26 ein unter Druck stehendes fluidisches Betätigungsmedium eingespeist werden, das als Quetschmittel unmittelbar auf die Umfangswand 13 einwirkt und diese, je nach Druck, mehr oder weniger weit radial zusammenquetscht.

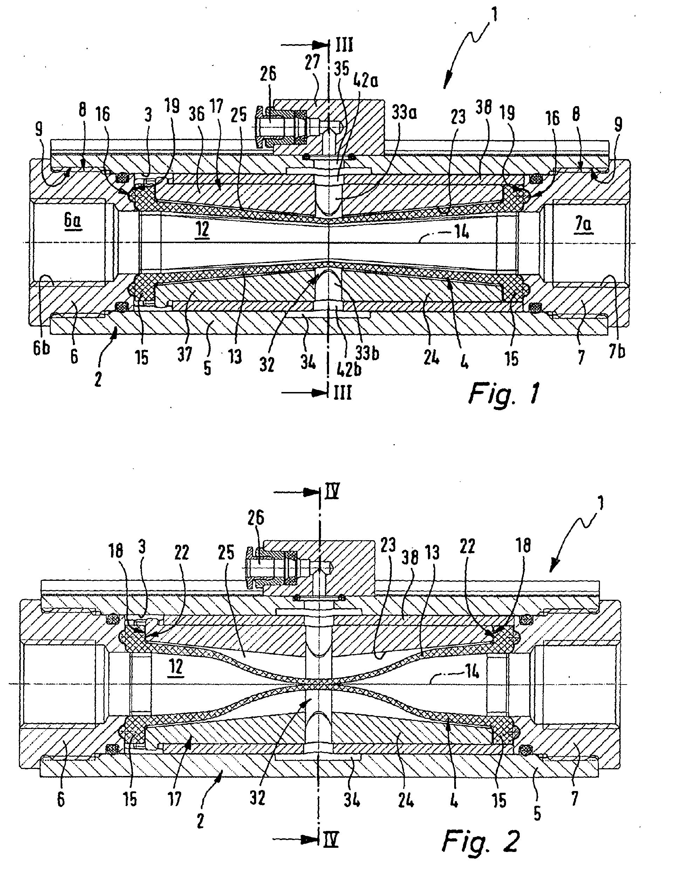

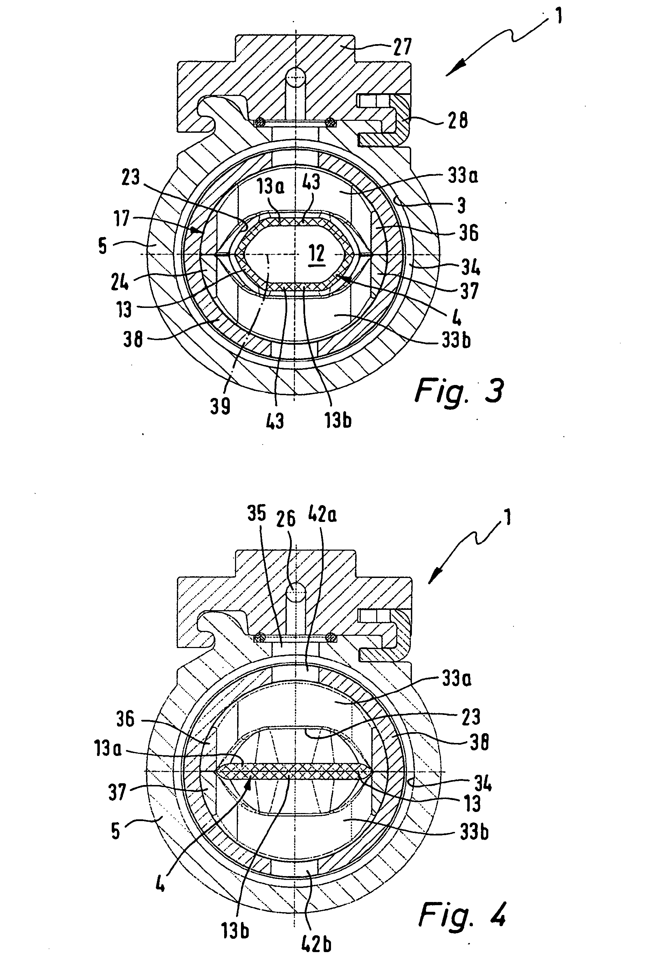

Die Figuren 1 und 3 zeigen den unbetätigten Zustand des Quetschventils 1, wenn der Beaufschlagungsraum 25 über den Steueranschluss 26 druckentlastet ist. Hier kann das in dem Ventilgliedkanal 12 strömende Fluid die Umfangswand 13 mangels Gegendruck radial nach außen drücken, sodass für dieses Fluid ein maximaler Durchflussquerschnitt durch das schlauchförmige Ventilglied 4 zur Verfügung gestellt wird.

Die Figuren 2 und 4 zeigen die Schließstellung des Quetschventils 1. Hier hat das unter Überdruck in den Beaufschlagungsraum 25 eingespeiste Betätigungsfluid die Umfangswand 13 so weit zusammengequetscht, dass sich radial gegenüberliegende Wandabschnitte 13a, 13b der Umfangswand 13 dicht aneinander anliegen. Der Durchflussquerschnitt durch den Ventilgliedkanal 12 ist dadurch abgesperrt.

Da als unmittelbar auf die Umfangswand 13 einwirkende Quetschmittel keine mechanischen Elemente vorhanden sind, sondern das fluidische Betätigungsmedium unmittelbar selbst das Quetschmittel bildet, ergibt sich eine Verteilung der Quetschkräfte über einen längeren Abschnitt der Umfangswand 13 in der Richtung der Ventilglied-Längsachse 14. Folglich wird die Umfangswand 13 durch den Quetschvorgang mit einem relativ großen Krümmungsradius verformt (Figur 2), was eine Schonung des Materials zur Folge hat. Außerdem hat der Bereich, in dem die Wandabschnitte 13a, 13b dichtend aneinander liegen, eine relativ große Ausdehnung in der Achsrichtung der Ventilglied-Längsachse 14.

Der Steueranschluss 26 kann ausgebildet sein, um eine Fluidleitung anschließen zu können, die zu einem externen Steuerventil führt. Beispielhaft befindet sich der Steueranschluss 26 an einem Anschlussblock 27, der an den Außenumfang des Gehäusehauptteils 5 lösbar angebaut ist. Bevorzugt ist der Anschlussblock 27 unter Mitwirkung mindestens einer Befestigungsklammer 28 mit der Außenfläche des Gehäusehauptteils 5 verspannt.

Anstelle des Anschlussblockes 27 könnte auch unmittelbar ein Steuerventil außen am Ventilgehäuse 2 installiert sein.

Wie man insbesondere den Figuren 1 und 2 entnehmen kann, verfügt der in dem außen bevorzugt kreiszylindrisch ausgebildeten Stützrohr 17 ausgebildete Rohrkanal 23 zweckmäßigerweise über einen sich verjüngenden Kanalquerschnitt, und zwar ausgehend von einander axial entgegengesetzten Seiten her hin zum längsmittigen Bereich 32. Anders ausgedrückt, erweitert sich der Rohrkanal 23 ausgehend von dem längsmittigen Bereich 32 zu den beiden Rohr-Stirnflächen 18 hin, wobei sich die Durchmesseränderung zweckmäßigerweise axial bis zu diesen Rohr-Stirnflächen 18 hin fortsetzt. Die Querschnittsänderung ist insbesondere kontinuierlich.

Folglich besitzt der Rohrkanal 23 einen minimalen Kanalquerschnitt in dem längsmittigen Bereich 32 und je einen maximalen Querschnitt auf axialer Höhe der beiden Rohr-Stirnflächen 18.

Wenn die zweckmäßigerweise eine im Wesentlichen konstante Wandstärke aufweisende Umfangswand 13 in der maximalen Offenstellung an der Stützrohrwand 24 anliegt, besitzt folglich auch diese Umfangswand 13 eine sich von axial außen nach axial innen hin verjüngende Gestalt. Der Querschnitt des Ventilgliedkanals 12 ist in dem längsmittigen Bereich 32 geringer als an seinen beiden äußeren axialen Endbereichen, auf Höhe des Flanschabschnittes 15.

Der engste Querschnitt der Fluidanschlüsse 6a, 7a entspricht im Wesentlichen dem Querschnitt des Ventilgliedkanals 12 an den äußeren axialen Endabschnitten. Dadurch ist eine turbulenzfreie Zu- und Abströmung gewährleistet. Weil sich der Ventilgliedkanal 12 anschließend jedoch zu dem längsmittigen Bereich 32 hin verengt, erfährt die Fluidströmung eine Beschleunigung, mit höchster Geschwindigkeit in dem längsmittigen Bereich 32. Durch diese hohe Geschwindigkeit tritt ein Selbstreinigungseffekt auf, der vor allem dann relevant ist, wenn das zu steuernde Fluid relativ dickflüssig ist oder Feststoffanteile besitzt. An dieser Stelle sei erwähnt, dass der Begriff "Fluid" in Verbindung mit dem den Ventilgliedkanal 12 durchströmenden Medium nicht auf flüssige und gasförmige Stoffe beschränkt ist, sondern beispielsweise auch pulvrige oder pastöse Medien umfassen soll. Es ist hier an jedes fließfähige Medium gedacht.

Bedingt durch die sich verjüngende Formgebung des Rohrkanals 23 wird die Umfangswand 13 nie so weit aufgeweitet, dass sie sich zwischen den beiden Flanschabschnitten 15 linear erstreckt. Dadurch wird eine Überdehnung in radialer Richtung vermieden, was der Lebensdauer des Schlauchmaterials zugute kommt.

Von Vorteil ist auch, wenn das schlauchförmige Ventilglied 4 insgesamt als gummielastisches Formteil ausgebildet ist, das die aus Figuren 1 und 3 ersichtliche Formgebung von Hause aus aufweist, also auch schon dann, wenn es keinerlei Beaufschlagung unterliegt. Es ist eine ausreichende Formstabilität vorhanden, um diese Gestalt vorzugeben. Dies bietet den Vorteil, dass die Wandung des schlauchförmigen Ventilgliedes 4 in der nicht von einem Betätigungsmedium beaufschlagten maximalen Offenstellung gemäß Figuren 1 und 3 seinen im Wesentlichen spannungsfreien Ausgangszustand einnimmt und abgesehen von den durch das zu steuernde Fluid ausgeübten Druckkräften kaum einer Beanspruchung unterliegt. Bei der anschließenden Betätigung wird die Umfangswand 13 dann stets nur nach innen gerichtet verformt, was der Lebensdauer zugute kommt.

Die Stützrohrwand 24 ist auf axialer Höhe des längsmittigen Bereiches 32 von zwei sich diametral gegenüberliegenden, radial verlaufenden Fluiddurchtrittskanälen 33a, 33b durchsetzt. Diese münden radial außerhalb des Stützrohres 17 in einen das Letztere konzentrisch umgebenden ringförmigen Verteilkanal 34, der über einen die Wandung des Gehäusehauptteils 5 durchsetzenden Gehäusekanal 35 mit dem Steueranschluss 26 verbunden ist. Das über den Letzteren zugeführte Betätigungsmedium kann sich über den Verteilkanal 34 um das Stützrohr 17 herum verteilen und über beide Fluiddurchtrittskanäle 33a, 33b in den Beaufschlagungsraum 25 zuströmen. Somit kann das Betätigungsfluid mit hohem Durchsatz zu- und abgeführt werden.

Anstelle der beiden Fluiddurchtrittskanäle 33a, 33b könnte auch eine andere Kanalanzahl vorgesehen sein. Allerdings ist es zweckmäßig, wenn der oder die Fluiddurchtrittskanäle 33a, 33b im Bereich des engsten Kanalquerschnittes in den Rohrkanal 23 einmünden.

Das Stützrohr 17 kann prinzipiell ein einstückiger Rohrkörper sein. Bevorzugt setzt er sich allerdings aus mehreren in der Umfangsrichtung entlang des Außenumfanges der Umfangswand 13 an diese angesetzten, jeweils einen bogenförmigen Querschnitt aufweisenden Schalenelementen 36, 37 zusammen. Beispielhaft handelt es sich um "Halbschalen", mit je einer Bogenerstreckung von 180°. Sie können vor der Installation im Ventilgehäuse 2 in radialer Richtung an den Außenumfang des Ventilgliedes 4 angesetzt werden. Dadurch ist eine sehr einfache Montage und bei Bedarf auch Demontage möglich. Das Ventilglied 4 kann mit angesetztem Stützrohr 17 als patronenartige Baueinheit in den Gehäuse-Innenraum 3 eingesetzt und auch wieder entnommen werden. Im Verschleißfall braucht lediglich das Ventilglied 4 ersetzt zu werden, das segmentierte Stützrohr 17 lässt sich wieder verwenden.

Um die Schalenelemente 36, 37 an Ort und Stelle am Außenumfang des Ventilgliedes 4 zu fixieren, ist auf der Ventilglied-Stützrohr-Baugruppe zweckmäßigerweise ein das Stützrohr 17 umschließendes Sicherungsrohr 38 vorhanden. Dieses kann mit der vorgenannten Baugruppe zu einer patronenartigen Baueinheit zusammengesetzt sein, um eine einheitliche Montage und Demontage bezüglich des Ventilgehäuses 2 zu ermöglichen.

Das Sicherungsrohr 38 ist zweckmäßigerweise von einer der Anzahl der Fluiddurchtrittskanäle 33a, 33b entsprechenden Anzahl weiterer Fluiddurchtrittskanäle 42a, 42b durchsetzt, die mit den Fluiddurchtrittskanälen 33a, 33b des Stützrohrs 17 in Fluidverbindung stehen und die Fluidverbindung zwischen den Letzteren und dem Verteilkanal 34 herstellen.

Exemplarisch sind die weiteren Fluiddurchtrittskanäle 42a, 42b bohrungsartig ausgebildet, was prinzipiell auch für die Fluiddurchtrittskanäle 33a, 33b des Stützrohrs 17 gelten kann. Letztere sind exemplarisch jedoch schlitzförmig ausgebildet, sodass sie bei einer anderen Bauform des Quetschventils 1 auch genutzt werden können, um mechanische Quetschelemente beweglich aufzunehmen.

Aus Figuren 3 und 4 ist eine bevorzugte Querschnittsform der Umfangswand 13 ersichtlich. Diese ist nicht kreisrund, sondern länglich. Dementsprechend verfügt auch der Rohrkanal 26 über einen daran angepassten länglichen Querschnitt.

Bevorzugt sind das Ventilglied 4 und der Rohrkanal 23 bezüglich der Ventilglied-Längsachse 4 derart winkelmäßig ausgerichtet, dass ihre Querschnitts-Längsachsen 39 zusammenfallen.

Durch diese längliche Querschnittsform ergibt sich beim Zusammenquetschen der Umfangswand 13 eine Vorzugsrichtung, die mit der Breitenrichtung der Querschnittsform zusammenfällt. Der von den Wandabschnitten 13a, 13b durchzuführende Quetschhub zum Freigeben oder Verschließen des Fluiddurchganges kann dadurch minimiert werden. Folglich reduziert sich auch die Biegebeanspruchung innerhalb des Materials der Schlauchwandung.

Bevorzugt ist die Umfangswand 13 so ausgerichtet, dass die längeren Querschnittsseiten den Fluiddurchtrittskanälen 33a, 33b zugewandt sind. Das zuströmende Betätigungsmedium trifft daher zunächst auf diese längeren Querschnittsseiten und sorgt für einen raschen und zuverlässigen Quetschvorgang ohne Verwerfungen in dem gummielastischen Schlauchmaterial.

Der Querschnitt des Gehäuse-Innenraumes 3 ist bevorzugt so an die Außenkontur der oben erwähnten patronenartigen Baueinheit 4, 18, 38 angepasst, dass Letztere einfach axial eingeschoben und bei Bedarf auch wieder axial herausgezogen werden kann. Die Wandung des Gehäusehauptteils 5 sorgt hierbei für die erforderliche Querabstützung innerhalb des Gehäuse-Innenraumes 3.

## Patentansprüche

1. Quetschventil, mit einem sich in einem Ventilgehäuse (2) zwischen zwei je einen Fluidanschluss (6a, 7a) aufweisenden Anschlusstücken (6, 7) erstreckenden, eine flexible Umfangswand (13) aufweisenden und einen von Fluid durchströmbaren Ventilgliedkanal (12) definierenden schlauchförmigen Ventilglied (4), und mit einem in dem Ventilgehäuse (2) um die Umfangswand (13) des Ventilgliedes (4) herum angeordneten Beaufschlagungsraum (25), in dem ein Quetschmittel unmittelbar auf die Umfangswand (13) des Ventilgliedes (4) einwirken kann, um diese zur Veränderung des von dem Ventilglied (4) zur Verfügung gestellten Durchflussquerschnittes zusammenzuquetschen, wobei die Umfangswand (13) des Ventilgliedes (4) von einem in das Ventilgehäuse (2) eingesetzten starren Stützrohr (17) umschlossen ist, das die radiale Aufweitung der Umfangswand (13) des Ventilgliedes (4) begrenzt und dessen die Umfangswand (13) des Ventilgliedes (4) aufnehmender Rohrkanal (23) einen sich axial von entgegengesetzten Seiten her zum längsmittigen Bereich (32) hin verjüngenden Querschnitt aufweist, wobei der Rohrkanal (23) derart ausgebildet ist, dass bei sich daran radial abstützendem Ventilglied (4) der Ventilgliedkanal (12) in dem längsmittigen Bereich (32) eine Engstelle aufweist, **dadurch gekennzeichnet, dass** das Quetschmittel ein den Beaufschlagungsraum (25) beaufschlagendes fluidisches Betätigungsmedium ist, wobei sich die Wandstärke der Umfangswand (13) des Ventilgliedes (2) ausgehend von den den beiden axialen Stirnseiten des Ventilgliedes (2) zugewandten Endbereichen bis hin zum axial mittigen Bereich des Ventilgliedes (2) kontinuierlich verringert.

2. Quetschventil nach Anspruch 1, **dadurch gekennzeichnet, dass** sich der Rohrkanal (23) ausgehend von den beiden Stirnseiten des Stützrohres (17) zu seinem längsmittigen Bereich (32) hin verjüngt.

3. Quetschventil nach Anspruch 1 oder 2, **dadurch gekennzeichnet, dass** das Stützrohr (17) so ausgebildet ist, dass die Umfangswand (13) des Ventilgliedes (4) im aufgrund des im Innern des Ventilgliedes (4) herrschenden Fluiddruckes an der Wandung des Rohrkanals (23) anliegenden Zustand eine sich axial von entgegengesetzten Seiten her zu dem längsmittigen Bereich (32) hin verjüngende Gestalt aufweist, wobei der Querschnitt des von dem Ventilglied (4) definierten Ventilgliedkanals (12) in dem längsmittigen Bereich (32) geringer ist als an den beiden äußeren axialen Endabschnitten.

4. Quetschventil nach einem der Ansprüche 1 bis 3, **dadurch gekennzeichnet, dass** das schlauchförmige Ventilglied (4) als gummielastisches Formteil ausgebildet ist, dessen Umfangswand (13) im nicht fluidbeaufschlagten Ausgangszustand allein aufgrund der eigenen Formstabilität eine sich von axial außen her zu seinem längsmittigen Bereich hin verjüngende Formgebung aufweist.

5. Quetschventil nach einem der Ansprüche 1 bis 4, **dadurch gekennzeichnet, dass** das Stützrohr (17) mindestens einen seine Wandung radial durchsetzenden Fluiddurchtrittskanal (33a, 33b) für den Durchtritt des zur Beaufschlagung der Umfangswand (13) des Ventilgliedes (4) dienenden Betätigungsmediums aufweist.

6. Quetschventil nach Anspruch 5, **dadurch gekennzeichnet, dass** der mindestens eine Fluiddurchtrittskanal (33a, 33b) in den verjüngten, längsmittigen Bereich des Rohrkanals (23) des Stützrohrs (17) einmündet.

7. Quetschventil nach Anspruch 5 oder 6, **gekennzeichnet durch** zwei sich bezüglich der Ventilglied-Längsachse (14) diametral gegenüberliegende Fluiddurchtrittskanäle (33a, 33b) in der Wandung des Stützrohrs (17).

8. Quetschventil nach einem der Ansprüche 1 bis 7, **dadurch gekennzeichnet, dass** das Stützrohr (17) aus mehreren um die Ventilglied-Längsachse (14) herum aneinandergereihten, jeweils einen bogenförmigem Querschnitt aufweisenden Schalenelementen (36, 37) besteht.

9. Quetschventil nach Anspruch 8, **dadurch gekennzeichnet, dass** das Stützrohr (17) aus lediglich zwei Schalenelementen (36, 37) zusammengesetzt ist, die jeweils eine Bogenerstreckung von 180° aufweisen.

10. Quetschventil nach Anspruch 8 oder 9, **dadurch gekennzeichnet, dass** ein das Stützrohr (17) koaxial umschließendes, die Schalenelemente (36, 37) unter Bildung des Stützrohres (17) zusammenhaltendes Sicherungsrohr (38) vorhanden ist.

11. Quetschventil nach Anspruch 10, **dadurch gekennzeichnet, dass** die Wandung des Sicherungsrohres (38) von mindestens einem Fluiddurchtrittskanal (42a, 42b) durchsetzt ist, über den das zum Zusammenquetschen der Umfangswand (13) erforderliche Druckmedium in den die Umfangswand (13) umgebenden Beaufschlagungsraum (25) gelangen kann.

12. Quetschventil nach einem der Ansprüche 1 bis 11, **dadurch gekennzeichnet, dass** das Ventilglied (4) im Bereich der Umfangswand (13) einen länglichen Querschnitt aufweist.

13. Quetschventil nach einem der Ansprüche 1 bis 12, **dadurch gekennzeichnet, dass** der Rohrkanal (23) einen länglichen Querschnitt aufweist.

14. Quetschventil nach Anspruch 13 in Verbindung mit Anspruch 12, **dadurch gekennzeichnet, dass** die Querschnitts-Längsachsen der Umfangswand (13) und des Rohrkanals (23) zusammenfallen.

## Claims

1. Pinch valve with a tubular valve member (4) which has a flexible circumferential wall and extends in a valve housing (2) between two connectors (6, 7) having a fluid port (6a, 7a) each and which defines a valve member passage (12) through which fluid can flow, and with a pressurisation chamber (25) arranged in the valve housing (2) around the circumferential wall (13) of the valve member (4), in which chamber a pinching means can directly act on the circumferential wall (13) of the valve member (4) in order to pinch it to change the flow cross-section made available by the valve member (4), wherein the circumferential wall (13) of the valve member (4) is enclosed by a rigid support tube (17) installed into the valve housing (2), which limits the radial expansion of the circumferential wall (13) of the valve member (4) and the tubular passage (23) of which, which accommodates the circumferential wall (13) of the valve member (4), has a cross-section tapering from opposite sides towards the longitudinal central region (32), wherein the tubular passage (23) is designed such that the valve member passage (12) has a narrowing in the longitudinal central region (32) as the valve member (4) is radially supported thereon, **characterised in that** the pinching means is an actuating fluid which pressurises the pressurisation chamber (25), wherein the wall thickness of the circumferential wall (13) of the valve member (4) continuously decreases from the end regions facing the two axial end faces of the valve member (2) towards the axially central region of the valve member (2).

2. Pinch valve according to claim 1, **characterised in that** the tubular passage (23) tapers from the two end faces of the support tube (17) towards its longitudinal central region (32).

3. Pinch valve according to claim 1 or 2, **characterised in that** the support tube (17) is designed such that the circumferential wall (13) of the valve member (4) has, in the state in which it bears against the wall of the tubular passage (23) owing to the fluid pressure prevailing in the interior of the valve member (4), a shape which tapers axially from opposite sides towards the longitudinal central region (32), the cross-section of the valve member passage (12) defined by the valve member (4) being less in the longitudinal central region (32) that in the two outer axial end sections.

4. Pinch valve according to any of claims 1 to 3, **characterised in that** the tubular valve member (4) is designed as a rubber-elastic moulded part the circumferential wall (13) of which has a shape tapering axially from the outside towards its longitudinal central region owing to its own dimensional stability even in the initial state in which it is not pressurised by fluid.

5. Pinch valve according to any of claims 1 to 4, **characterised in that** the support tube (17) comprises at least one fluid through-passage (33a, 33b) extending radially through its wall for the passage of the actuating fluid required for the pressurisation of the circumferential wall (13) of the valve member (4).

6. Pinch valve according to claim 5, **characterised in that** the at least one fluid through-passage (33a, 33b) terminates into the tapered longitudinal central region of the tubular passage (23) of the support tube (17).

7. Pinch valve according to claim 5 or 6, **characterised by** two fluid through-passages (33a, 33b) in the wall of the support tube (17) which are arranged diametrically opposite each other with respect to the longitudinal axis (14) of the valve member.

8. Pinch valve according to any of claims 1 to 7, **characterised in that** the support tube (17) consists of a plurality of shell elements (36, 37) lined up around the longitudinal axis (14) of the valve member and each having an arched cross-section.

9. Pinch valve according to claim 8, **characterised in that** the support tube (17) is made up from only two shell elements (36, 37), each covering an arch of 180°.

10. Pinch valve according to claim 8 or 9, **characterised in that** a securing body (38) coaxially enclosing the support tube (17) and holding the shell elements (36, 37) together while forming the support tube (17) is provided.

11. Pinch valve according to claim 10, **characterised in that** at least one fluid through-passage (42a, 42b) via which the pressure fluid required for pinching the circumferential wall (13) can reach the pressurisation chamber (25) surrounding the circumferential wall (13).

12. Pinch valve according to any of claims 1 to 11, **characterised in that** the valve member (4) has an oblong cross-section in the region of the circumferential wall (13).

13. Pinch valve according to any of claims 1 to 12, **characterised in that** the tubular passage (23) has an oblong cross-section.

14. Pinch valve according to claim 13 in combination with claim 12, **characterised in that** the cross-sectional longitudinal axes of the circumferential wall (13) and the tubular passage (23) coincide.

## Revendications

1. Vanne à manchon déformable, comportant un élément de vanne (4) en forme de tuyau flexible, qui s'étend entre deux embouts de raccordement (6, 7), munis chacun d'un raccord pour fluide (6a, 7a), comporte une paroi périphérique (13) flexible et définit un conduit (12) à travers lequel peut circuler un fluide, et comportant une chambre de sollicitation (25), qui est agencée dans le boîtier de vanne (2) autour de la paroi périphérique (13) de l'élément de vanne (4) et dans laquelle un moyen de pincement peut agir directement sur la paroi périphérique (13) de l'élément de vanne (4) afin de comprimer par pincement ladite paroi en vue de faire varier la section de passage mise à disposition par l'élément de vanne (4), la paroi périphérique (13) de l'élément de vanne (4) étant entourée par un tube de support (17) rigide, qui est inséré dans le boîtier de vanne (2) et qui limite l'élargissement radial de la paroi périphérique (13) de l'élément de vanne (4) et dont le conduit (23), qui loge la paroi périphérique (13) de l'élément de vanne (4), a une section qui se rétrécit dans la direction axiale depuis des côtés opposés vers la zone médiane longitudinale (32), le conduit (23) du tube étant configuré de telle sorte que, lorsque l'élément de vanne (4) est en appui radialement contre celui-ci, le conduit (12) de l'élément de vanne possède un rétrécissement dans la zone médiane longitudinale (32), **caractérisée en ce que** le moyen de pincement est un milieu de sollicitation fluidique qui sollicite la chambre de sollicitation (25), l'épaisseur de la paroi périphérique (13) de l'élément de vanne (4) diminuant en continu à partir des zones d'extrémité, orientées vers les deux faces frontales axiales de l'élément de vanne (2), jusqu'à la zone axialement médiane de l'élément de vanne (2).

2. Vanne à manchon déformable selon la revendication 1, **caractérisée en ce que** le conduit (23) du tube de support se rétrécit en partant des deux faces frontales du tube de support (17) vers sa zone médiane longitudinale (32).

3. Vanne à manchon déformable selon la revendication 1 ou 2, **caractérisée en ce que** le tube de support (17) est configuré de telle sorte que la paroi périphérique (13) de l'élément de vanne (4), dans la position en appui contre la paroi du conduit (23) du tube de support sous l'effet de la pression du fluide régnant à l'intérieur de l'élément de vanne (4), possède une forme se rétrécissant dans la direction axiale depuis des côtés opposés vers la zone médiane longitudinale (32), la section du conduit (12) de l'élément de vanne, défini par l'élément de vanne (4), étant inférieure dans la zone médiane longitudinale (32) à celle au niveau des deux zones d'extrémité axiales extérieures.

4. Vanne à manchon déformable selon l'une quelconque des revendications 1 à 3, **caractérisée en ce que** l'élément de vanne (4) en forme de tuyau flexible est réalisé sous la forme d'une pièce moulée élastique, dont la paroi périphérique (13), dans la position initiale non sollicitée par un fluide, possède, par le seul fait de sa propre stabilité de forme, une forme se rétrécissant dans la direction axiale depuis l'extérieur vers sa zone médiane longitudinale.

5. Vanne à manchon déformable selon l'une quelconque des revendications 1 à 4, **caractérisée en ce que** le tube de support (17) comporte au moins un conduit de passage du fluide (33a, 33b), traversant radialement sa paroi, pour le passage du milieu de sollicitation destiné à solliciter la paroi périphérique (13) de l'élément de vanne (4).

6. Vanne à manchon déformable selon la revendication 5, **caractérisée en ce que** ledit au moins un conduit de passage du fluide (33a, 33b) débouche dans la zone médiane longitudinale rétrécie du conduit (23) du tube de support (17).

7. Vanne à manchon déformable selon la revendication 5 ou 6, **caractérisée par** deux conduits de passage du fluide (33a, 33b), diamétralement opposés par rapport à l'axe longitudinal (14) de l'élément de vanne, dans la paroi du tube de support (17).

8. Vanne à manchon déformable selon l'une quelconque des revendications 1 à 7, **caractérisée en ce que** le tube de support (17) est formé par plusieurs coques (36, 37) alignées autour de l'axe longitudinal (14) de l'élément de vanne, ayant chacune une section en forme d'arc.

9. Vanne à manchon déformable selon la revendication 8, **caractérisée en ce que** le tube de support (17) est constitué uniquement de deux coques (36, 37) qui ont chacune une dimension d'arc de 180°.

10. Vanne à manchon déformable selon la revendication 8 ou 9, **caractérisée en ce qu'**un tube de sûreté (38), qui entoure coaxialement le tube de support (17) et maintient ensemble les coques (36, 37) moyennant la formation du tube de support (17), est présent.

11. Vanne à manchon déformable selon la revendication 10, **caractérisée en ce que** la paroi du tube de sûreté (38) est traversée par au moins un conduit de passage du fluide (42a, 42b), par l'intermédiaire duquel le milieu sous pression, nécessaire pour le pincement de la paroi périphérique (13), peut parvenir dans la chambre de sollicitation (25) entourant la paroi périphérique (13).

12. Vanne à manchon déformable selon l'une quelconque des revendications 1 à 11, **caractérisée en ce que** l'élément de vanne (4) a une section oblongue dans la zone de la paroi périphérique (13).

13. Vanne à manchon déformable selon l'une quelconque des revendications 1 à 12, **caractérisée en ce que** le conduit (23) du tube de support a une section oblongue.

14. Vanne à manchon déformable selon la revendication 13 en association avec la revendication 12, **caractérisée en ce que** les axes longitudinaux de la section de la paroi périphérique (13) et du conduit (23) du tube de support coïncident.
